# DEMANDE DE BREVET EUROPEEN

(11) **EP 0 917 323 A1**
(43) Date de publication de la demande: **19.05.1999**
(21) Numéro de dépôt: 98440259.4
(22) Date de dépôt: 13.11.1998
(51) Int. Cl.: H04L 12/64, H04L 12/66

(54) **Serveur de télécommunication intégré multimédia**

(30) Priorité: 14.11.1997 FR 9714475
(71) Demandeur: Société Alsacienne et Lorraine de Télecommunications et d'Electronique AL, 67200 Wolfisheim (FR)
(72) Inventeur: Schaal, Denis, 67201 Eckbolsheim (FR); Bohn, Pierre, 67114 Eschau (FR)
(74) Mandataire: Nuss, Pierre

(57) **Abrégé**

La présente invention a pour objet un serveur de télécommunication pour entreprise ou structure analogue.

Serveur caractérisé en ce qu'il est principalement constitué, d'une part, par un ensemble central de commutation (2) comprenant un module de gestion (3) à microprocesseur non dédié (3') servant de support à un système d'exploitation informatique multitâche standard supervisant en temps réel les commutations de trames multiplexées, un module (4) formant matrice de commutation en temps réel de voies numérisées et un module (5) de transfert de messages vocaux, reliés entre eux par au moins un lien ou bus interne (6, 6', 6" ) de communication et de transfert, d'autre part, par des modules (7) d'interface avec des lignes (8, 9, 10, 11) de transmission analogique et/ou numérique et/ou avec un ou des liens ou des bus (12) de réseaux informatiques. internes à l'entreprise, et, enfin, par des modules (13) d'interface avec des lignes de transmission (14, 15) reliées aux réseaux de communication publics, analogique (14') et numérique (15'), ces modules étant integrés dans un unique ensemble structurel.

## Description

La présente invention concerne le domaine de l'informatique et de la communication notamment la communication entre une entreprise et le monde extérieur, utilisant une pluralité de moyens et de modes de communications différents, et a pour objet un serveur de télécommunication multimédia pour une entreprise ou une structure analogue.

La présente invention concerne plus particulièrement un serveur de télécommunication permettant l'interconnexion d'une pluralité d'équipements de communication vocaux et informatiques internes à une entreprise ou un site et leur connexion, d'une part, à des réseaux publics tels qu'un réseau téléphonique commuté analogique (RTC), un réseau numérique à intégration de services RNIS (par exemple Numéris), ou un réseau de transport de données par paquets (par exemple Transpac X25 ou Internet) et, d'autre part, à des réseaux privés tels que par exemple ceux constitués de lignes louées numériques ou analogiques, de réseaux internes à une entreprise, de réseaux locaux informatiques (par exemple du type Ethernet) ou encore de réseaux de transmission de données par paquets (par exemple du type Intranet ou du type mettant en oeuvre le protocole de communication X25).

Il existe déjà différents dispositifs assurant en partie ou en totalité l'interconnexion des divers équipements indiqués précédemment, chacun d'entre eux présentant toutefois un ou plusieurs inconvénients ou une ou plusieurs limitations.

Ainsi, il est connu de relier entre eux un serveur informatique et un autocommutateur par l'intermédiaire d'une liaison d'échanges bidirectionnelles gérée par un protocole de communication adaptée.

Toutefois, une telle construction hybride, nécessite le recours à une unité informatique extérieure pour gérer et superviser ladite interconnexion de voies de communication. Ceci implique obligatoirement la réalisation et la mise en oeuvre d'un protocole d'interconnexion entre les deux systèmes (par exemple du type CSTA), ce qui ralentit les exécutions et augmente la charge de travail de l'unité centrale du serveur informatique.

On connaît également déjà des dispositifs d'interconnexion intégrés basés sur une structure matérielle spécifique sous forme d'une carte ou d'une unité centrale spécifique de commutation temps réel et/ou sur un logiciel d'exploitation spécifique supplémentaire temps réel.

Il en résulte des temps de développement allongés pour créer des applications et une réalisation dudit développement par les seuls spécialistes du système propriétaire. De plus, les fonctions et services pouvant être réalisés par ces systèmes spécifiques sont limités par les capacités du matériel (mémoire, unité centrale) et du logiciel particuliers installés et mis en oeuvre, qui n'évoluent pas aussi rapidement que les matériels et logiciels standards.

Le but de la présente invention est de pallier aux différents inconvénients précités et de proposer un serveur de télécommunication multimédia, assurant simultanément des fonctions du type serveur informatique et des fonctions du type autocommutateur et pouvant réaliser l'interconnexion au moins des différents équipements et supports de communication précités, tout en présentant une structure matérielle et une structure logicielle basée sur des éléments standards, combinés de manière nouvelle et avantageuse.

En outre, un autre but recherché est de pouvoir permettre l'exécution simultanée de plusieurs applications indépendantes par ledit serveur de télécommunication, sans nuire sensiblement à la qualité d'exécution de chacune desdites applications.

A cet effet, la présente invention a pour objet un serveur de télécommunication pour entreprise ou structure analogue, caractérisé en ce qu'il est principalement constitué, d'une part, par un ensemble central de commutation comprenant un module de gestion à microprocesseur non dédié servant de support à un système d'exploitation informatique multitâche standard, supervisant en temps réel les commutations de trames multiplexées, un module formant matrice de commutation en temps réel de voies numérisées et un module de transfert de messages vocaux, reliés entre eux par au moins un lien ou bus interne de communication et de transfert, d'autre part, par des modules d'interface avec des lignes de transmission analogique et/ou numérique et/ou avec un ou des liens ou des bus de réseaux informatiques, internes à l'entreprise, et, enfin, par des modules d'interface avec des lignes de transmission reliées aux réseaux de communication publics analogique et numérique, lesdits modules étant intégrés dans un unique ensemble structurel.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 1 est une représentation schématique d'un mode de réalisation matérielle préférentiel du serveur de télécommunication selon l'invention ;
la figure 2 est un schéma synoptique montrant diverses connexions et liaisons internes et externes possibles pour le serveur selon l'invention ;
la figure 3 est un schéma synoptique montrant un exemple de constitution de l'ensemble de commutation faisant partie du serveur selon l'invention ;
la figure 4 est un schéma synoptique partiel illustrant le traitement partagé d'applications logicielles exécutables par des unités informatiques reliées au serveur de télécommunication ;
la figure 5A est un schéma synoptique illustrant l'organisation logicielle du serveur selon l'invention, en relation avec ses éléments matériels constitutifs ;
la figure 5B est une représentation schématique illustrant les différents logiciels exécutables et leurs relations opérationnelles ;
la figure 6 est un schéma synoptique d'un dispositif de sonorisation et de surveillance pouvant être associé au serveur selon l'invention, et,
la figure 7 est un schéma synoptique d'un réseau de télécommunication vocale, utilisant la voix en paquets de données, entre au moins deux entreprises mettant en oeuvre des serveurs selon l'invention.

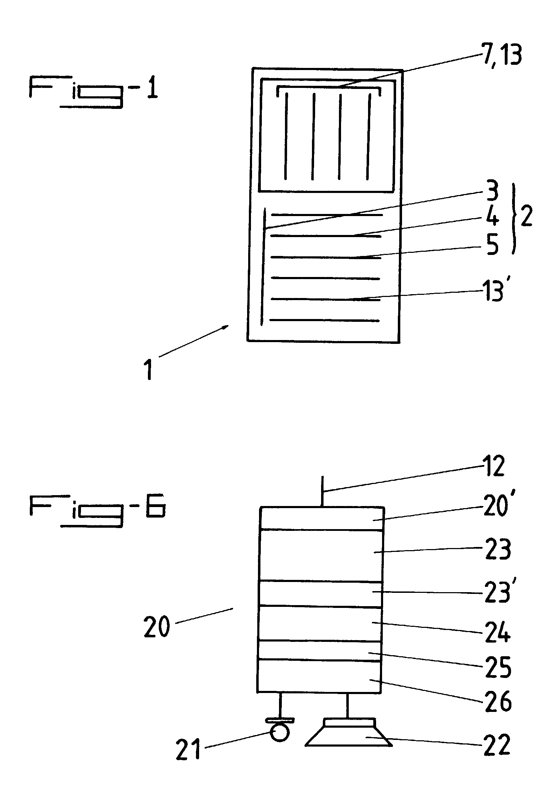

Conformément à l'invention et comme le montre notamment les figures 1 à 3 des dessins annexés, le serveur de télécommunication 1 est principalement constitué, d'une part, par un ensemble central de commutation 2 en temps réel de canaux transportant des informations multiplexées de type MIC, de type voie numérisée et de type données, comprenant un module de gestion de commande et de contrôle 3 à microprocesseur non dédié 3' (par exemple du type Pentium - marque déposée) servant de support à un système d'exploitation informatique multitâche standard (par exemple du type Windows NT - marque déposée), un module propriétaire 4 formant matrice de commutation en temps réel de voies numérisées associés à des horloges adaptées et un module propriétaire 5 de transfert de messages vocaux, reliés entre eux par au moins un lien ou bus interne 6, 6', 6" de communication et de transfert, d'autre part, par des modules propriétaires 7 d'interface avec des lignes 8, 9, 10, 11 de transmission analogique et/ou numérique et/ou avec un ou des liens ou des bus 12 de réseaux informatiques, internes à l'entreprise, et, enfin, par des modules propriétaires 13 d'interface avec des lignes de transmission 14, 15 reliées aux réseaux de communication publics, analogique 14' et numérique 15', lesdits modules étant intégrés dans un unique ensemble structurel.

Le serveur 1, préférentiellement à structure matérielle et logicielle complètement intégrée, repose sur une combinaison judicieuse d'éléments standards, évolutive en capacité (mémoire), en puissance (unité centrale) et en nombre et types de fonctions (système d'exploitation).

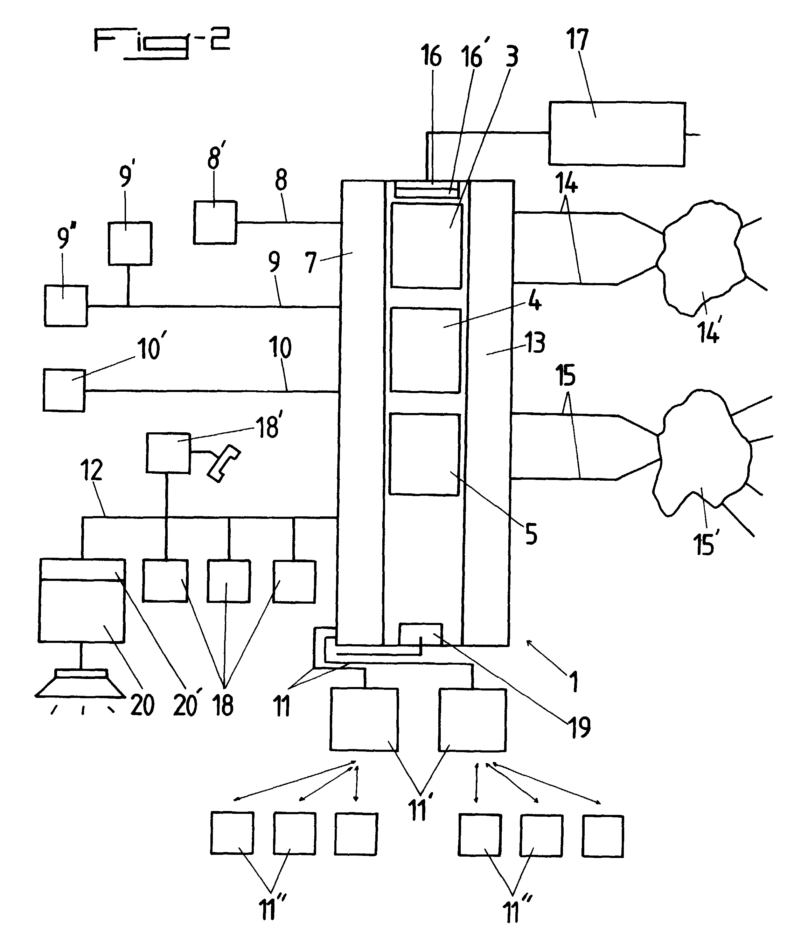

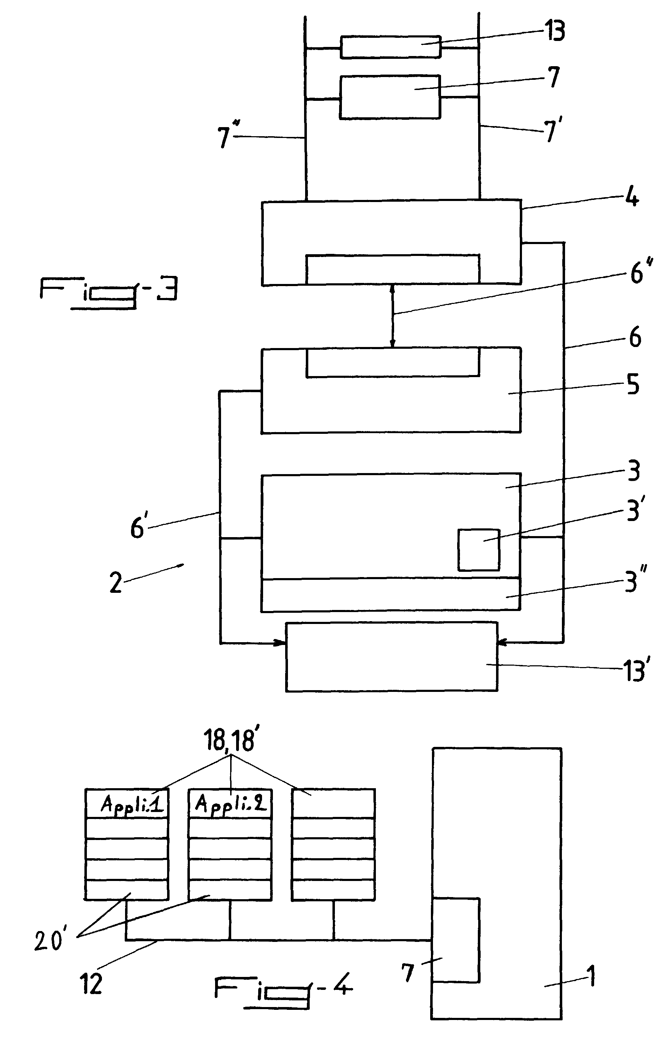

Les différents modules précités peuvent, par exemple, être implantés dans un unique châssis standard du type "tour", les modules standard 3 et propriétaires 4 et 5 étant implantés sur des cartes informatiques standards (par exemple au format PC IBM PCI, ISA...) reliées avantageusement entre elles par un bus type ISA (pour les modules 3, 4 et 5), par un bus type PCI (pour les modules 3 et 5) et par un bus type MVIP associés à des interfaces correspondantes (pour les modules 4 et 5), comme le montre à titre d'exemple illustratif la figure 3 des dessins annexés.

Toutefois, les modules 4 et 5 pourront également, le cas échéant, être regroupés sur une unique carte.

Ledit châssis "tour" pourra également recevoir d'autres cartes spécifiques à l'utilisateur et assurant diverses fonctions particulières, par exemple d'interface de télécommunication, de traitement de données et de signaux ou autres fonctions informatiques.

Le module ou la carte 3 de gestion, de commande et de contrôle servira également de support au générateur d'applications logicielles multimédia et de couplage téléphonie/informatique (CTI), ainsi qu'éventuellement à des applications propriétaires spécifiques à l'utilisateur considéré.

En outre, comme le montre la figure 3 des dessins annexés, les modules d'interfaces 7 et 13, regroupés sur une ou plusieurs cartes, sont reliés à l'ensemble central de commutation 2, par exemple par l'intermédiaire d'un bus de signalisation 7' et d'un bus de transmission de données multiplexées 7".

De plus, ledit châssis du serveur de télécommunication 1 pourra également recevoir des cartes informatiques supplémentaires d'extension 13' ayant un format adapté (cartes format PC).

Comme le montre la figure 2 des dessins annexés, les modules d'interfaces internes 7 pourront, par exemple, assurer la liaison du serveur 1 avec une ou plusieurs lignes 8 analogiques Z reliées chacune à au moins un terminal 8' correspondant, avec une ou plusieurs lignes 9 de transmission du type RNIS T0 ou S0 reliées chacune à au moins un terminal 9' de type "données" et/ou à au moins un terminal RNIS 9" (par exemple un téléphone RNIS), avec au moins une ligne 10 du type V24-X25 reliée à un terminal 10' de type "données", avec au moins une ligne 12 de communication informatique (par exemple du type Ethernet) reliée à un réseau local informatique regroupant plusieurs unités 18, 18' et/ou à au moins un dispositif 20 de sonorisation et de surveillance audio ou encore avec des lignes de transmission 11 reliées à des stations 11' de communication par voie hertzienne (par exemple des stations de transmission radio ou des stations de communication HF du type DECT, GSM ou autre), pouvant communiquer avec des unités distantes 11' mobiles ou non.

Les modules d'interfaces externes 13 comprendront notamment des interfaces permettant d'assurer la liaison du serveur de télécommunication 1 avec un réseau public RTC 14' par l'intermédiaire de lignes analogiques 14 louées ou non (LR, LP) et avec un réseau public RNIS 15' par l'intermédiaire de lignes numériques (par exemple des lignes du type RNIS T0, RNIS T2 ou analogue).

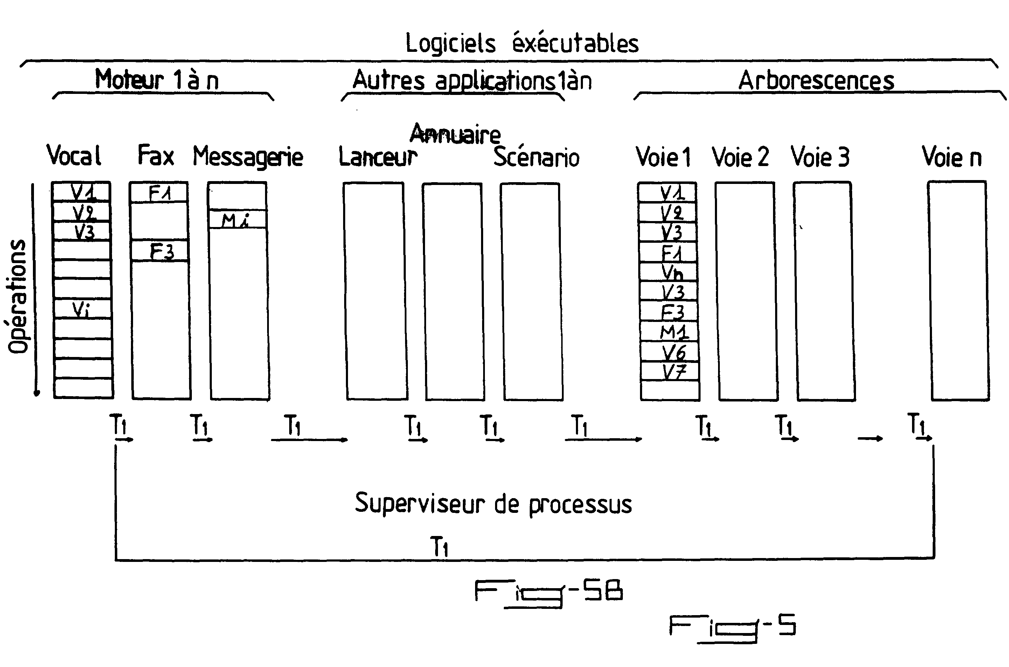

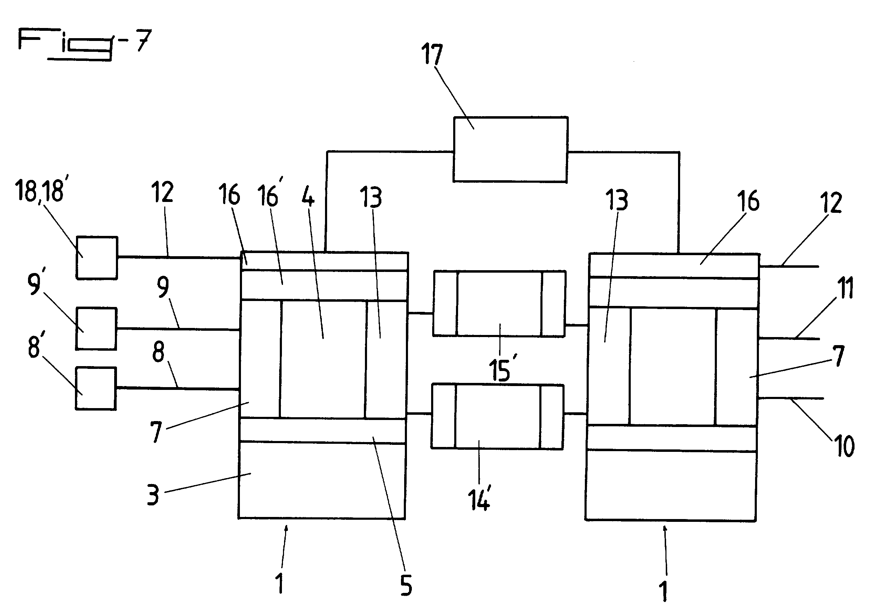

Comme le montrent les figures 2 et 7 des dessins annexés, le serveur 1 comporte également un module 16 d'interface (par exemple une interface du type TCP/IP) avec au moins un réseau 17 de commutation de paquets (par exemple un réseau public du type Internet ou un réseau privé du type Intranet), associé à un module 16' de conversion bidirectionnelle de signaux numériques vocaux en trames en signaux numériques en paquets, formé, par exemple, par un ou plusieurs processeurs de signaux associés à une matrice de commutation matérielle.

Selon une caractéristique de l'invention, le module 5 de transfert de messages vocaux recherche, transfère et/ou traite, de manière automatique et autonome, les fichiers à contenu sonore, en fonction d'instructions stockées dans une mémoire 3" de signalisation et de commandes du microprocesseur 3' de l'unité de gestion 3.

Ledit module 5 de transfert de messages vocaux de conversion de protocole vocal assure ainsi en lecture et en écriture le transfert par rafales (par exemple du type connu sous la désignation DMA - Direct Memory Access ou accès mémoire direct) des fichiers à contenu de nature sonore ou destinés à une application sonore avec la mémoire vive associée au microprocesseur 3' ou de la mémoire de masse du module de gestion 3. Les fichiers précités (par exemple stockés sur CD-ROM ou disque) deviennent ainsi directement accessibles à l'application en cours d'exécution et évitent de ce fait au système d'exploitation de devoir faire des copies de blocs "son" vers le module 5 de transfert de messages vocaux.

Les transferts de fichiers précités opérés par le module 5, sans faire appel au microprocesseur 3', sont déclenchés en fonction des instructions contenues dans une mémoire 3" de signalisation et de commandes du microprocesseur 3'.

En effet, ladite mémoire 3" comporte une zone "données", constituant une sorte de zone tampon reliée à une voie basse fréquence et une zone "signalisation", les deux zones fonctionnant comme des boîtes aux lettres.

Par conséquent, le microprocesseur 3' et le système d'exploitation se trouve soulagé d'une charge de travail importante (copies, conversion et transferts de fichiers à finalité vocale), aboutissant à une augmentation de la disponibilité dudit microprocesseur pour exécuter d'autres tâches.

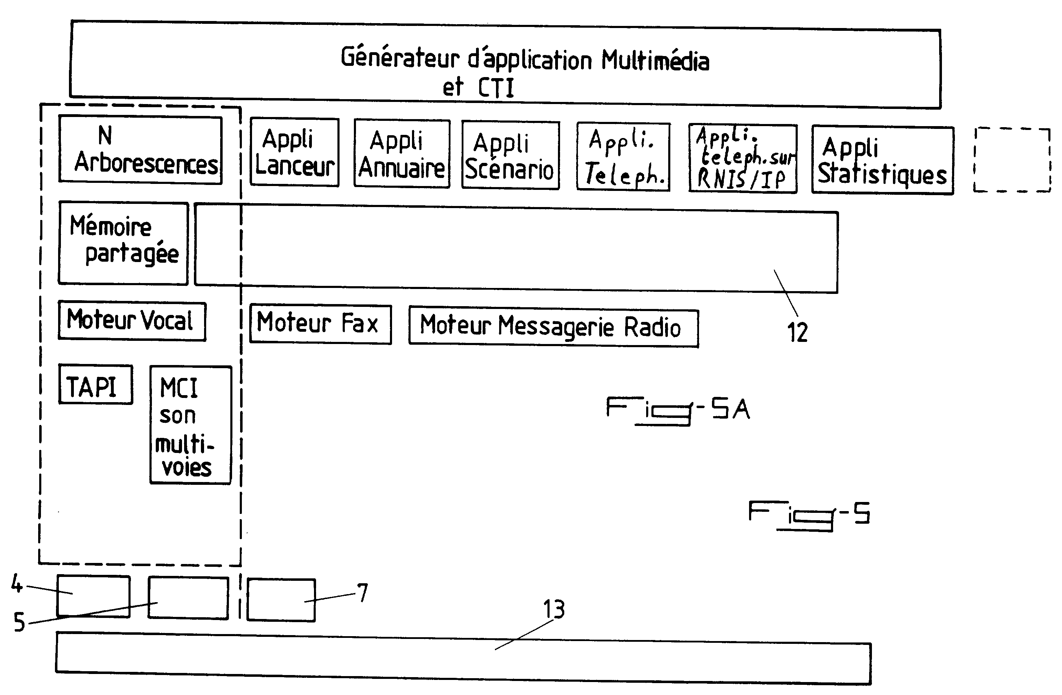

Conformément à une caractéristique avantageuse de l'invention, représentée sur les figures 5A et 5B des dessins annexés, les logiciels exécutables par ledit serveur 1 sous le contrôle du système d'exploitation multitâche comprennent, d'une part, des applications prédéfinies (également appelées "moteurs" ci-après), notamment une application ("moteur vocal") assurant le traitement et la gestion de lignes internes 8, 9, 10, 11, 12 et externes 14, 15 en relation avec les différents modules 7, 13 d'interface de données et/ou vocale, en réponse à des requêtes externes ou internes, d'autre part, des applications programmables (dénommées ci-après "logiciels d'applications") adaptées aux souhaits de l'utilisateur et exécutées soit en interne par ledit serveur 1, soit en externe par une ou plusieurs unité(s) informatique(s) 18 adaptée(s) connectée(s) audit serveur 1, en faisant appel aux applications prédéfinies (moteurs), et, enfin, par des voies d'arborescences vocales (constituant également des applications), dont chacune est composée d'une succession d'opérations internes de type vocal ou de téléphonie et d'opérations externes basées sur des requêtes et/ou des actions attendues, ces voies d'arborescences pouvant être lancées et arrêtées indépendamment les unes des autres.

Les moteurs peuvent comprendre, outre le moteur vocal, par exemple également un moteur télécopie (traitant les demandes d'émission et de réception de télécopies) et un moteur de radio messagerie (traitant les demandes d'émission de réception de messages radio).

Les logiciels d'application peuvent comprendre par exemple une base de données de personnes à prévenir, des applications de gestion de modules de surveillance, un module historique et statistique, des applications de diffusion de messages sonores, des applications d'interphonie interne ou analogue.

De manière avantageuse, les différents logiciels exécutables communiquent entre eux par l'intermédiaire d'une interface logicielle de communication inter-tâches (également désignés par API), préférentiellement l'interface de réseau du type connu sous la désignation "NetBios", et d'interfaces logicielles orientées téléphonie (par exemple TAPI) et d'interfaces logicielles orientées applications vocales (par exemple MCI) et sont mis en oeuvre, le cas échéant en parallèle, partiellement ou totalement par ledit serveur 1 ou par au moins une unité informatique 18 ou un ordinateur personnel adapté(e) et relié(e) audit serveur 1 par une liaison ou un bus de communication 12 faisant partie d'un réseau informatique local relié audit serveur 1, par exemple du type connu sous la désignation Ethernet.

Ainsi, il est possible, si nécessaire, de distribuer les différentes tâches à exécuter et de faire fonctionner chaque moteur et chaque logiciel d'application sur une unité informatique externe 18 différente reliés entre eux et au serveur 1 par un lien adapté, tel que par exemple un lien Ethernet (voir figure 4).

L'avantage du choix du réseau type NetBios consiste également en une suppression de travaux fastidieux de configuration des unités informatiques 18 à connecter, la configuration de chaque unité s'effectuant de manière dynamique et automatique à l'exécution des divers logiciels.

En outre, au lieu de tout faire exécuter à une seule application (par exemple le moteur vocal), les traitements peuvent être répartis (voir figure 5B). Chaque arborescence n'est pas simplement constituée d'une structure mémoire ou disque d'opérations interprétées, mais est une véritable application au sens propre du terme, les opérations "longues" étant effectuées par l'arborescence elle même.

En effet, en fonctionnant sur un système d'exploitation multitâche comme cela est le cas pour le serveur de télécommunication 1 de la présente invention, le superviseur de processus du système d'exploitation se charge de répartir automatiquement et équitablement le temps d'utilisation de l'unité centrale entre l'ensemble des applications à exécuter. La seule tâche ralentie est donc la tâche ayant émise la requête "longue".

Les arborescences du serveur de télécommunication 1 sont de plus de véritables applications compilées, ce qui permet déjà à chacune d'entre elles d'utiliser l'ensemble des API mises à leur disposition par le système d'exploitation multitâche sous-jacent (connexion SQL, Internet, envoi message réseau, graphisme à l'écran,...), et permet également de lancer et/ou d'arrêter de façon native chacune des voies séparément, sans influence sur le fonctionnement des autres voies ou du moteur vocal comme représenté par la figure 5A.

Les rôles et les interactions des différents exécutables seront expliqués, à titre d'exemple, plus précisément ci-après, en référence aux figures 5A et 5B.

Une arborescence vocale est typiquement constituée d'un ensemble de requêtes, principalement vocales (Vi sur fig. 5B), mais aussi fax (Fi sur fig. 5B) et de messageries (Mi sur fig. 5B).

Chacune de ces requêtes est envoyée au moteur correspondant. Ce dernier exécute physiquement la requête (un moteur effectue en effet la liaison réelle avec le matériel), puis renvoie un état retour à l'arborescence qui lance la prochaine requête, etc...

L'architecture logicielle en place permet, en cas d'apparition d'un nouveau média de communication, de créer tout simplement un nouveau moteur, tout en conservant le reste de l'architecture logicielle.

Les logiciels orientés applications finales, tels que l'annuaire ou le lanceur, permettent, par paramétrage, de lancer un certain nombre d'opérations de façon automatisée.

Ainsi, dans le cas par exemple d'un constructeur automobile dont un robot d'une chaîne de production tombe en panne, la détection de la panne revient au module "lanceur" qui va "prévenir" l'annuaire. L'annuaire, principalement constitué d'une base de personnes regroupées en listes de diffusion, va alors automatiquement effectuer, par l'intermédiaire du serveur 1, l'appel de toutes les personnes en charge de la maintenance dans ce cas de figure. Les appels effectués peuvent être de différents types (téléphone avec une arborescence vocale, fax, radio-messagerie) et seront donc automatiquement dirigés vers le moteur correspondant, la communication entre logiciels applicatifs et moteurs se faisant exclusivement via réseau.

Conformément à une caractéristique supplémentaire de l'invention, le serveur de télécommunication 1 est avantageusement pourvu d'au moins une interface de communication avec une unité informatique extérieure 18 autorisant, par l'intermédiaire d'échanges dynamiques de données et/ou de commande de type connu sous la désignation DDE ou OLE, le pilotage et la programmation dudit serveur 1 par des applications standards du commerce. En effet, ces applications disposent souvent d'une ouverture vers le monde extérieur de type client DDE ("Dynamic Data Exchange"), ou client OLE ("Object Linking and Embedding") ou autre.

Une application originale possible pour le serveur de télécommunication 1 et qui tire partie des possibilités de transport de "paquets son" sur lien Ethernet peut consister en la réalisation d'un équipement de sonorisation permettant la diffusion de messages parlés ou d'alerte ou de surveillance dans le cadre de sites tels que, par exemple, aérogares, sites industriels ou sites à risques.

Ainsi l'invention a également pour objet, comme le montrent les figures 2 et 6 des dessins annexés, un dispositif de sonorisation et de surveillance audio de locaux publics ou privés, caractérisé en ce qu'il est constitué par au moins une unité fonctionnelle locale 20 reliée, d'une part, au serveur de télécommunication 1 décrit précédemment par l'intermédiaire d'une interface 20' de lien informatique local 12, par exemple du type Ethernet, pour la transmission par paquets et, d'autre part, à au moins un microphone 21 et à au moins un haut-parleur 22, ladite unité fonctionnelle locale 20 comprenant des moyens 23 d'assemblage et de désassemblage de paquets, incluant des moyens 23' de compression/décompression de données, des moyens 24 de synchronisation, des moyens 25 de codage/décodage numérique/analogique et des moyens d'amplification bidirectionnelle de signaux analogiques reliées audit(s) microphone(s) et audit(s) haut-parleur(s).

Bien entendu, un ordinateur individuel ou PC standard muni de moyens audio et logiciels appropriés pourrait rendre partiellement le même service.

Mais le dispositif précité consiste en la réalisation d'une unité de sonorisation propriétaire et incorporant des moyens d'amplification basse fréquence bidirectionnels permettant aussi bien de diffuser de la parole et de la musique que de surveiller l'intrusion de personnes non autorisées dans un local sous surveillance. Cette solution selon l'invention est beaucoup plus compacte, moins coûteuse, plus fiable (pas de ventilateur, ...) et prête à l'emploi (pas de démarrage du PC sur disque dur, ...).

Conformément à une caractéristique de l'invention, représentée également sur la figure 2 des dessins annexés, le serveur 1 peut être relié, par l'intermédiaire d'au moins un lien ou bus 12 informatique, à au moins un ordinateur individuel 18' associé à un poste téléphonique relié au serveur 1 ou équipé au moins de moyens de communication audio, de manière à fournir audit au moins un ordinateur individuel 18', et le cas échéant au poste téléphonique associé, des services du type de ceux fournis par un autocommutateur tels que, par exemple, mise en relation, identification de l'appelant, mise en garde, transfert, renvoi, conférence ou analogue, ainsi que des services résultant d'un couplage de type téléphonie / informatique tels que, par exemple, historique et durée des communications, annuaire, messagerie ou analogue.

Une des possibilités décrites précédemment consiste à permettre à un PC multi-média, équipé d'une carte Ethernet et de moyens audio du type connu sous la désignation "Sound blaster" par la société Creativ Labs ou autres, d'avoir accès via le réseau local interne d'entreprise (RLE) de type Ethernet, à l'ensemble des facilités de communication d'entreprise fournies par l'application téléphonie intégrée dans le serveur de télécommunication 1 et aux applications de type CTI sur PC, c'est-à-dire : historique des communications, durée, annuaires, taxation, messagerie, etc...

Dans ce cas, le poste téléphonique classique et sa ligne analogique sont supprimés et remplacés par les fonctions vocales du PC multimédia et par le lien Ethernet.

Enfin, l'invention a également pour objet, comme le montre la figure 7 des dessins annexés, un réseau de télécommunication privé multi-support entre au moins deux entreprises, caractérisé en ce qu'il comprend à chaque extrémité de branchement audit réseau un serveur de télécommunication 1 selon l'invention, comportant au moins un module 16 d'interface avec au moins un réseau 17 de commutation de paquets, associé à un module 16' de conversion bidirectionnelle de signaux numériques vocaux en trames en signaux numériques en paquets formé de processeurs de signaux adaptés, lesquels assurent l'interconnexion avec ledit réseau 17 de commutation de paquets des différents modules 7 et 13 d'interfaces numériques et/ou analogiques reliés aux lignes de transmission 8 à 11, 14 et 15 et/ou aux bus ou liens locaux 12 internes à chaque entreprise branchée sur ledit réseau de télécommunication par l'intermédiaire d'un serveur 1, fournissant les moyens de mise en relation et de signalisation propres au réseau 17 considéré et, en relation avec les différents modules 3, 4, 5, 7 et 13 desdits serveurs 1 considérés, l'ensemble des services du type autocommutateur.

Il est ainsi possible, grâce au serveur de télécommunication 1 selon l'invention, de construire un réseau de communication inter-entreprises privé via le réseau Internet/Intranet mettant uniquement en oeuvre à chaque extrémité du réseau de transmission un serveur 1 et permettant de ce fait de fournir aux entreprises connectées au réseau Internet/Intranet, d'une part une passerelle vocale intégrée ainsi que la signalisation et les moyens de mise en relation propres à chacun de ces réseaux (appel - connexion...) et d'autre part, tous les services propres à un autocommutateur conforme à l'état de l'art et une opportunité pour réduire de façon significative leurs frais de communications.

Le serveur 1 présente, comme déjà indiqué, une architecture qui fédère un ensemble de moyens matériels et logiciel (applications) dans une même unité compacte.

La passerelle vocale lP/RNIS réalisée avantageusement à l'aide d'un ou plusieurs processeurs de signaux est associée à une matrice de commutation matérielle, l'ensemble des deux entités fournissant la possibilité d'interconnecter avec le réseau TCP/IP, la totalité des interfaces analogiques ou numériques intégrés dans le Serveur, et de transmettre à travers ce réseau tous les services communément procurés par un autocommutateur conforme à l'état de l'art. Parmi les services fournis on peut citer : l'exploitation et la supervision par un PC de lignes multiples, l'appel - mise en garde - transfert - d'appels entre plusieurs PC et terminaux téléphoniques, la conférence multi-parties voix et données entre sites reliés entre eux à chaque extrémité par le serveur 1 de la présente invention et messagerie / aide à l'exploitation grâce aux modules 5 de transfert de messages vocaux.

Le serveur de télécommunication 1 selon la présente invention peut également être utilisé comme une passerelle directe entre des moyens de communication téléphoniques, matérialisés par des terminaux téléphoniques 9" ou des unités informatiques 18' équipés de carte audio munis d'un combiné ou d'un casque téléphonique, raccordés en interne au serveur 1 au moyen de bus de type RNIS ou Ethernet, et les réseaux Internet/Intranet, lesquels réseaux mettent en communication les deux serveurs 1 couplés à lui à chaque extrémité du réseau de télécommunication (voir figure 2 et figure 7).

L'avantage évident d'une telle solution est de permettre aux entreprises de réduire d'une façon drastique leur budget de communication, au prix d'une légère réduction de la qualité de la transmission et de disposer au travers du réseau Internet, à chaque extrémité, de l'ensemble des services procurés par un autocommutateur (PBX) conforme à l'état de l'art.

Une autre potentialité du serveur de télécommunication 1 selon l'invention est sa capacité de pouvoir avantageusement fournir des services du type autocommutateur ou intercommunication (tels que conférence, supervision de lignes, filtrage patron/secrétaire) particulièrement appréciées dans le domaine de la communication des petites et moyennes entreprises, sans être obligé d'utiliser des postes téléphoniques "propriétaire", grâce à l'application propriétaire de téléphonie, intégrée dans ledit serveur 1 et à l'agencement judicieux des messages offerts dans le protocole RNIS en utilisant des postes RNIS standard.

L'invention a également pour objet un procédé de communication et de signalisation, permettant de réaliser toutes les fonctions d'un autocommutateur et d'un système d'intercommunication (supervision de l'état des lignes internes et externes raccordées à un serveur de télécommunication 1, transfert et renvoi d'appel, filtrage patron/secrétaire ou autre) au niveau d'un terminal RNIS standard, relié audit serveur de télécommunication.

Ce procédé de communication entre un serveur de télécommunication 1 et un terminal RNIS 9" standard, relié à ce dernier, consiste, d'une part, à envoyer audit terminal RNIS 9", doté de moyens d'affichage adaptés et capable de traiter les messages du protocole de communication RNIS, une trame informative contenant, dans un élément de message des données relatives à certaines informations concernant l'état des lignes reliées au serveur 1, du serveur 1 et/ou du terminal RNIS 9" concerné, à afficher en permanence ces données au niveau dudit terminal RNIS 9" jusqu'à l'envoi d'une nouvelle trame informative avec un élément de message à afficher modifié, et à émettre une nouvelle trame informative à chaque changement d'état d'une ligne racordée audit serveur 1 et, d'autre part, à transmettre dudit terminal RNIS 9" vers ledit serveur 1, dans une trame RNIS issue dudit terminal, des informations concernant une ou des touche(s) actionnée(s) par l'utilisateur au niveau dudit terminal.

Plus précisément, la mise en oeuvre de ces services précités, notamment de la supervision de l'état des lignes, suppose que les terminaux RNIS standards raccordés au serveur de télécommunication 1 soient équipés de touches et de moyens d'affichage, par exemple de type LCD (affichage à cristaux liquides), et capables de traiter les messages informatifs dénommés "INFO" du protocole RNIS. L'affichage des informations concernant l'état du serveur 1, des autres lignes et du poste concerné au niveau desdits terminaux est mis en oeuvre par le serveur de télécommunication 1 grâce à des moyens incorporés dans ledit serveur et par une utilisation judicieuse de la trame "INFO" existant dans le protocole RNIS niveau 3, laquelle trame "INFO" contient le texte à afficher dans l'élément "DISPLAY" du message. Le terminal RNIS affiche le texte et le maintient jusqu'à ce qu'un nouveau message lui soit envoyé. Après une utilisation locale, par exemple programmation du terminal, le dernier texte est à nouveau affiché.

Dans le cas de la supervision des lignes internes et externes, le texte envoyé par le serveur de télécommunication 1 au terminal RNIS dans l'élément "DISPLAY" du message "INFO" contient pour chaque ligne téléphonique supervisée un "élément d'identification de ligne" et son " état courant". A chaque changement d'état d'une ligne téléphonique, le serveur de télécommunication 1 envoie un nouvel élément "DISPLAY".

L'invention permet également, par exemple, de filtrer un terminal RNIS principal appelé "poste patron", par un poste RNIS secondaire appelé "poste secrétaire", étant sous entendu que les affectations du nombre de patrons par secrétaire ou vice versa, peuvent être programmées et que outre la voie privée et la voie filtrée du patron, il existe une voie privilégiée entre chaque patron et sa secrétaire.

Les services décrits ci-dessus mettent avantageusement à profit les potentialités logicielles du serveur de télécommunication 1 et l'utilisation judicieuse des messages offerts dans le protocole RNIS.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Serveur de télécommunication pour entreprise ou structure analogue, caractérisé en ce qu'il est principalement constitué, d'une part, par un ensemble central de commutation (2) comprenant un module de gestion (3) à microprocesseur non dédié (3') servant de support à un système d'exploitation informatique multitâche standard, supervisant en temps réel les commutations de trames multiplexés, un module (4) formant matrice de commutation en temps réel de voies numérisées et un module (5) de transfert de messages vocaux, reliés entre eux par au moins un lien ou bus interne (6, 6', 6") de communication et de transfert, d'autre part, par des modules (7) d'interface avec des lignes (8, 9, 10, 11) de transmission analogique et/ou numérique et/ou avec un ou des liens ou des bus (12) de réseaux informatiques, internes à l'entreprise, et, enfin, par des modules (13) d'interface avec des lignes de transmission (14, 15) reliées aux réseaux de communication publics, analogiques (14') et numériques (15'), ces modules étant intégrées dans un unique ensemble structurel.

2. Serveur de télécommunication selon la revendication 1, caractérisé en ce qu'il comporte également un module (16) d'interface avec au moins un réseau externe (17) de commutation de paquets, associé à un module (16') de conversion bidirectionnelle de signaux numériques vocaux en trames en signaux numériques en paquets, formé, par exemple, par un ou plusieurs processeurs de signaux associés à une matrice de commutation matérielle.

3. Serveur de télécommunication selon l'une quelconque des revendications 1 et 2, caractérisé en ce que le module (5) de transfert de messages vocaux recherche, transfère et/ou traite, de manière automatique et autonome, les fichiers à contenu sonore, en fonction d'instructions stockées dans une mémoire (3") de signalisation et de commandes du microprocesseur (3') de l'unité de gestion (3).

4. Serveur de télécommunications selon l'une quelconque des revendications 1 à 3, caractérisé en ce que les logiciels exécutables par ledit serveur (1) sous le contrôle du système d'exploitation multitâche comprennent, d'une part, des applications prédéfinies, notamment une application assurant le traitement et la gestion de lignes internes (8, 9, 10, 11, 12) et externes (14, 15) en relation avec les différents modules (7, 13) d'interface de données et/ou vocale, en réponse à des requêtes externes ou internes, d'autre part, des applications programmables adaptées aux souhaits de l'utilisateur et exécutées soit en interne par ledit serveur (1), soit en externe par une ou plusieurs unité(s) informatique(s) (18) adaptée(s) connectée(s) audit serveur (1), en faisant appel aux applications prédéfinies, et, enfin, par des voies d'arborescences vocales, dont chacune est composée d'une succession d'opérations internes de type vocal ou de téléphonie et d'opérations externes basées sur des requêtes et/ou des actions attendues et qui peuvent être lancées et arrêtées indépendamment les unes des autres.

5. Serveur de télécommunication selon la revendication 4, caractérisé en ce que les différents logiciels exécutables communiquent entre eux par l'intermédiaire d'une interface logicielle de communication inter-tâches et d'interfaces logicielles orientées téléphonie et d'interfaces logicielles orientées applications vocales et sont mis en oeuvre, le cas échéant en parallèle, partiellement ou totalement par ledit serveur (1) ou par au moins une unité informatique (18) ou un ordinateur personnel adapté(e) ou relié(e) audit serveur (1) par une liaison ou un bus de communication (12) faisant partie d'un réseau informatique local relié audit serveur (1), par exemple du type connu sous la désignation Ethernet.

6. Serveur de télécommunication selon l'une quelconque des revendication 1 à 5, caractérisé en ce qu'il est pourvu d'au moins une interface de communication avec une unité informatique extérieure (18) autorisant, par l'intermédiaire d'échanges dynamiques de données et/ou de commande de type connu sous la désignation DDE ou OLE, le pilotage et la programmation dudit serveur (1).

7. Serveur de télécommunication selon l'une quelconque des revendications 1 à 6, caractérisé en ce qu'il est relié, par l'intermédiaire d'au moins un lien ou bus (12) informatique, à au moins un ordinateur individuel (18') associé à un poste téléphonique relié au serveur (1) ou équipé au moins de moyens de communication audio, de manière à fournir audit au moins un ordinateur individuel (18'), et le cas échéant au poste téléphonique associé, des services du type de ceux fournis par un autocommutateur tels que, par exemple, mise en relation, identification de l'appelant, mise en garde, transfert, renvoi, conférence ou analogue, ainsi que des services résultant d'un couplage de type téléphonie / informatique tels que, par exemple, historique et durée des communications, annuaire, messagerie ou analogue.

8. Dispositif de sonorisation et de surveillance audio de locaux publics ou privés, caractérisé en ce qu'il est constitué par au moins une unité fonctionnelle locale (20) reliée, d'une part, à un serveur de télécommunication (1) selon l'une quelconque des revendications 1 à 7 par l'intermédiaire d'une interface (20') de lien informatique local (12), par exemple du type Ethernet, pour la transmission par paquets et, d'autre part, à au moins un microphone (21) et à au moins un haut-parleur (22), ladite unité fonctionnelle locale (20) comprenant des moyens (23) d'assemblage et de désassemblage de paquets, incluant des moyens (23') de compression/décompression de données, des moyens (24) de synchronisation, des moyens (25) de codage/décodage numérique/analogique et des moyens d'amplification bidirectionnelle de signaux analogiques reliées audit(s) microphone(s) et audit(s) haut-parleur(s).

9. Réseau de télécommunication privé multi-support entre au moins deux entreprises, caractérisé en ce qu'il comprend à chaque extrémité de branchement audit réseau un serveur de télécommunication (1) selon l'une quelconque des revendications 2 à 7, comportant au moins un module (16) d'interface avec au moins un réseau (17) de commutation de paquets, associé à un module (16') de conversion bidirectionnelle de signaux numériques vocaux en trames en signaux numériques en paquets formé de processeurs de signaux adaptés, lesquels assurent l'interconnexion avec ledit réseau (17) de commutation de paquets des différents modules (7 et 13) d'interfaces numériques et/ou analogiques reliés aux lignes de transmission (8 à 11, 14 et 15) et/ou aux bus ou liens locaux (12) internes à chaque entreprise branchée sur ledit réseau de télécommunication par l'intermédiaire d'un serveur (1), fournissant les moyens de mise en relation et de signalisation propres au réseau (17) considéré et, en relation avec les différents modules (3, 4, 5, 7 et 13) desdits serveurs (1) considérés, l'ensemble des services du type autocommutateur.

10. Procédé de communication entre un serveur de télécommunication selon l'une quelconque des revendications 1 à 7 et un terminal RNIS standard, relié audit serveur de télécommunication, caractérisé en ce qu'il consiste, d'une part, à envoyer audit terminal RNIS (9"), doté de moyens d'affichage adaptés et capable de traiter les messages du protocole de communication RNIS, une trame informative contenant, dans un élément de message des données relatives à certaines informations concernant l'état des lignes reliées au serveur (1), du serveur (1) et/ou du terminal RNIS (9") concerné, à afficher en permanence ces données au niveau dudit terminal RNIS (9") jusqu'à l'envoi d'une nouvelle trame informative avec un élément de message à afficher modifié, et à émettre une nouvelle trame informative à chaque changement d'état d'une ligne racordée audit serveur (1) et, d'autre part, à transmettre dudit terminal RNIS (9") vers ledit serveur (1), dans une trame RNIS issue dudit terminal, des informations concernant une ou des touche(s) actionnée(s) par l'utilisateur au niveau dudit terminal.
